# EUROPEAN PATENT SPECIFICATION

(11) **EP 2 926 234 B1**
(45) Date of publication and mention of the grant of the patent: **28.08.2019**
(21) Application number: 12888885.6
(22) Date of filing: 20.11.2012
(51) Int. Cl.: G06F 9/451, G06F 3/0481, G06F 3/0488, G06F 9/46, G06F 3/0484

(54) **MANAGING APPLICATIONS IN MULTITASKING ENVIRONMENT**
VERWALTUNG VON ANWENDUNGEN IN EINER MULTITASKINGUMGEBUNG
GESTION D'APPLICATIONS DANS UN ENVIRONNEMENT MULTITÂCHE

(43) Date of publication of application: 07.10.2015
(73) Proprietor: Jolla OY, 33210 Tampere (FI)
(72) Inventor: BURCHELL, Robin Harold, N-7125 Vanvikan (NO); GERDT, Petri Mikael, FI-33100 Tampere (FI); ROPPOLA, Jaakko Tapani Samuel, FI-34140 Mutala (FI); SCHÜLE, Martin, FI-33500 Tampere (FI)
(74) Representative: Suominen, Kaisa Liisa
(86) International application number: PCT/FI2012/051142
(87) International publication number: WO 2014/080065

(56) References cited:
- US-A1- 2003 142 141
- US-A1- 2007 250 787
- US-A1- 2008 163 082
- US-A1- 2011 252 357
- 'Showcasing Beryl' SOFTPEDIA 14 December 2006, XP055213890 Retrieved from the Internet: <URL:http://web.archive.org/web/20120730021 745/http://news.softpedia.com/ news/Beryl-Showcase-42386.shtml> [retrieved on 2013-09-02]
- 'iTunes: Keeping the Mini Player on Top - The Mac Observer' THE MAC OBSERVER 22 June 2012, XP055213896 Retrieved from the Internet: <URL:http://web.archive.org/web/20120626022 017/http://www.macobserver.com/ tmo/article/itunes keeping the mini_player_on top> [retrieved on 2013-09-02]

## Description

### Technical field

The present application relates to methods, devices and computer programs for managing software applications in a multitasking environment, as well as such applications.

### Background

With the advances in computing technology, portable computing devices can be used for ever more tasks, and can carry a plurality of software applications for carrying out these tasks. An example of a portable computing device is a smart phone running an operating system such as Linux, iOS or Android.

US 2011/252357 A1 (CHAUDHRI IMRAN) describes a system in which a view selection mode is entered for selecting one of concurrently open applications for display in a corresponding application view. An initial group of open application icons in a first predefined area and at least a portion of the first application view adjacent to the first predefined area are concurrently displayed. The initial group of open application icons corresponds to at least some of the concurrently open applications. A gesture is detected on a respective open application icon in the first predefined area, and a respective application view for a corresponding application is displayed without concurrently displaying an application view for any other application in the concurrently open applications.

US 2008/163082 A1 (RYTIVAARA MARKKU) describes an apparatus in which a first and second application are presented on the display so that the second application is transparently presented over the first application wherein the first and second applications are active applications.

US 2007/250787 A1 (KAWAHARA HIDEYA ET AL.) describes a system that uses three-dimensional (3D) and other rendering effects within a graphical display environment on a mobile device to enable a new application to be displayed while a currently-running application window remains visible within a main viewing area of a screen. During operation, the system receives a request to display a new application in the graphical display environment. Next, in response to the request, the system generates a slanted view of the currently running application window by slanting the currently-running application window through a 3D rendering effect and moving the currently-running application window towards an edge of the screen to make room for the new application. Finally, the system displays the new application in a new display window next to the slanted view of the currently-running application window.

The document with the title "Showcasing Beryl - Astonishing Linux desktop effects!", SOFPEDIA, 14 December 2006, describes Beryl an OpenGL accelerated desktop that seeks to provide a free, open source desktop experience to the Linux community that reflects the wishes of the users.

The document with the title "iTunes: Keeping the Mini player on Top - The Mac Observer", THE MAC OBSERVER, 22 June 2012, describes the iTunes' Mini Player properties.

In a non-multitask environment applications are shut down when the next application is started. Some applications may save the status / state of the application before shutting the application down. In those implementations the application uses previously saved state when the application is restarted. In multitask environments two or more applications can run at the same time.

It may sometimes be challenging to manage multiple running applications in a computing platform. One of the problems is knowing which applications are running, for example in order to quickly switch to another application. One way to toggle between applications is to use certain buttons to view running applications, for example as pressing F3 on a MacBook computer to display all active windows in smaller size for selecting another application (a so-called expose functionality). However, on portable computing devices such as smart phones switching between applications in this manner may be clumsy and it may even be difficult to see which application to switch to from the miniature windows.

There is, therefore, a need for improved ways of switching between applications in multitask computer environment.

### Summary

According to the invention, the applications running in the system can be viewed without exiting the view of the current application. This reduces the need to open and close applications for toggling between them. A user may be able to see certain information right in the home view without reopening the application he is interested in. Information may be updated content from the application itself or other information related to the application such as energy usage.

A user may be able to execute actions or go deeper into the application hierarchy from the home view (without switching into the application), via the displayed thumbnail of the app. The advantage may be that task flows of the user are shortened and the needed steps are reduced. For example in messaging, tapping on the thumbnail of an application may open the main view of the application, but the user may also access a conversation directly via the thumbnail.

The operating system of the device may provide a service that while pushing the current application away (e.g. to a side) the user is able to see the thumbnails of the running apps, their content, as well as device status info on top. This so-called home view may be "peeked into" so that the thumbnails of the running applications are displayed by making the current application partially transparent. When the user releases the touch from the screen he is taken fully to the home view. By this "peeking" operation the user may follow the content of another application without leaving the current application that is in the foreground.

According to a first aspect there is provided a method for managing computer programs in a computer. According to a second aspect there is provided a computer operating system product. According to a third aspect there is provided a computer. The invention is defined by the appended claims.

According to an embodiment of the above aspects, at least a part of said normal user interface representation of a first program is displayed simultaneously with reduced representations of programs, the reduced representations being indicative of states of the computer programs. According to an embodiment, the normal user interface representation of the current program is displayed simultaneously with the reduced representations in a transparent manner so that the reduced representations are can be seen beneath the current application. According to an embodiment, the transparency is controlled by setting a transparency value of the reduced representations as a function of the position of the pointer on the screen along a gesture. This can be done e.g. by combining pixel colour values for the user interface directly, or by modifying an alpha channel value of the reduced representation to make the reduced representation partially transparent (not completely opaque). According to an embodiment, a part of or some of the reduced representations may be displayed so that the reduced representations obstruct only a part of the screen leaving a part of the screen unobstructed for the normal user interface of the current program. According to an embodiment, an essential reduced representation is received for an application, and the essential reduced representation comprises a subset of information from the application so that it can be displayed in essentially normal size. According to an embodiment, the essential reduced representation can receive user input and be controlled based on the received input so that fully displaying the normal user interface representation of the other application for input can be avoided. The reduced representation of the other comprises indication of activity of the application, system resource usage of the other application such as energy consumption, processor usage or memory usage, or any combination. According to an embodiment, the reduced representation of the other comprises communication activity such as number of received or sent messages, amount of received or sent data or activity in a network service to which the other application is connected such as a social media service. According to an embodiment, the user can configure which application information or activity information is included in the essential reduced representation. The various embodiments may be used alone or combined with other embodiments.

According to an embodiment of the above aspects, a request is received at an application to produce an essential reduced representation of the application, where the essential reduced representation comprises a subset of information from the application's normal user interface, and the essential reduced representation is then formed for presenting among essential reduced representations on a user interface. According to an embodiment,
activity information as above is formed of said application and provided for presenting to a user. The various embodiments may be used alone or combined with other embodiments.

The various aspects may be combined into a single device or system, carried out in a single method or realized as software interoperating with software applications, or the various aspects may be realized as standalone entities.

### Description of the Drawings

In the following, the various embodiments will be explained with reference to the figures, in which
- Fig. 1: shows an example portable computer;
- Fig. 2: shows a block diagram of an example computer;
- Fig. 3: shows an example smart phone with a user interface;
- Fig. 4: shows an example view of an application;
- Fig. 5: shows reduced representations of applications for selecting and managing applications;
- Fig. 6: shows a view of a telephone application (for making calls);
- Fig. 7: shows a reduced representation with a resource usage indication (indication of consumed power);
- Fig. 8: shows a flow chart of a method for showing application status;
- Fig. 9: shows a flow chart of a method for managing applications on a computer;
- Fig. 10: shows an example of managing applications on an apparatus; and
- Fig.11: shows another example of managing applications on an apparatus.

### Detailed Description

The present invention is described next by using a smart phone as an example of the apparatus. However, the teachings of the present solution may be utilized also in other computing devices having a display and a graphical user interface. Examples of such devices are tablet and laptop computers.

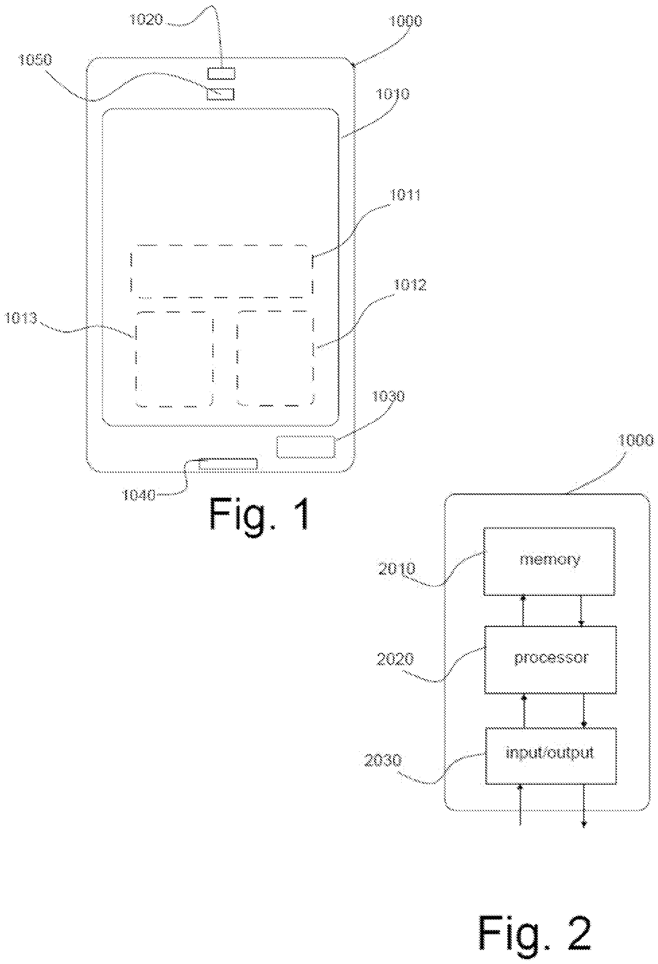

Fig. 1 shows an example of an apparatus 1000. The apparatus 1000 comprises a display 1010, which may be a touch-screen display e.g. capacitive or resistive touch-screen display. The display may consist of a backlight element and a LCD Liquid Crystal Display in the front of the backlight. The backlight may be even i.e. same illumination level throughout the display or the distribution of the light may be controlled depending on the backlight type.

The apparatus according to Figure 1 may comprises one or more cameras 1020 being situated on same side of the apparatus with the display, and/or on the opposite side. According to an embodiment, the apparatus comprises two cameras placed on opposite sides of the apparatus 1000, e.g. front side i.e. display side and rear side of the apparatus. The apparatus 1000 may have one or more physical buttons 1030 and one or more touch-screen buttons 1012-1013. In an embodiment, the apparatus 1000 comprises either physical buttons or touch-screen buttons. The apparatus 1000 may comprise a keypad being provided either on the display as a touch-screen keypad 1011 or on the housing of the apparatus 1000 as a physical keypad. The apparatus 1000 may further comprise a microphone 1040 and loudspeaker 1050 to receive and to transmit audio. The apparatus 1000 may also comprise communication interface not shown in Fig. 1 configured to connect the apparatus to another device, e.g. a server or a terminal, via wireless and/or wired network, and to receive and/or transmit data by said wireless/wired network. Wireless communication may be based on any cellular or non-cellular technology, for example GSM Global System for Mobile communication, WCDMA Wideband Code Division Multiple Access, CDMA Code Division Multiple Access. Wireless communication may also relate to short range communication such as Wireless Local Area Network WLAN, Bluetooth etc. The apparatus 1000 may comprise a battery or similar power source. The apparatus 1000 may comprise one or more sensors, such as accelerometer, gyroscope, magnetometer etc. The apparatus 1000 may comprise a vibrator for providing movement of the apparatus in silent mode and for providing tactile feedback in user interface situations.

As shown in Fig. 2, the apparatus 1000 may comprise a memory 2010 configured to store computer program code used for operating the apparatus and for providing user interface, and to store user interface data. User interface related software may be implemented as separate application and/or it can be part of the operating system of the apparatus. The application and/or operating system may be upgraded by a server system to alter configuration and functionality of the user interface. User interface may include default values and it may include values which can be modified by the users. The apparatus 1000 comprises a processor 2020 that executes the program code to perform the apparatus's functionality.

The apparatus may comprise an input/output element 2030 to provide e.g. user interface views to a display 1010 of the apparatus, or audio via loudspeaker 1050 and to receive user input through input elements, such as buttons 1011, 1012, 1013, 1030, microphone 1040 or camera 1020. The input buttons may be used by fingers, stylus, touch pad, mouse, joystick, etc.

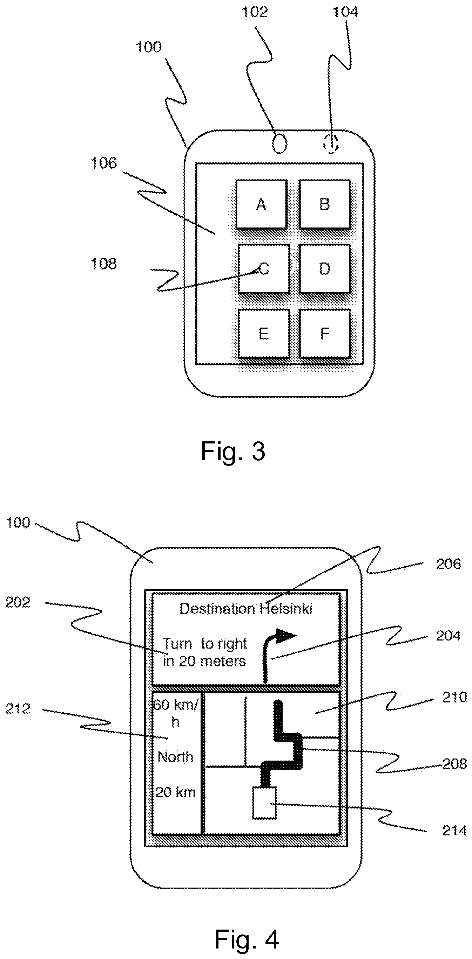

Fig. 3 shows an example smart phone 100, a type of a portable computer that can be used for communication. The phone 100 can have front camera 102 facing to the user and a rear camera 104 on the other side of the phone. The phone has display where graphical elements can be shown to the user. Example graphical elements can be for example icons 108 of applications (A, B, C, D, E, F) installed in the smart phone 100. When user taps on an application icon the application is typically started. That is, the phone operating system has a view where a user can control applications by starting the applications he desires. Fig. 3 can also be understood to present a home view where applications A-F that are running at a certain time can be shown according to an embodiment. That is, each active application may be shown with a representation 108 on the home view.

The operating system of the computer may support multitasking. In a multitasking environment two or more applications can be run at the same time e.g. using so-called time-slicing. Depending on the configuration of the operating system and the configuration or programming of the application in question, the applications can be allocated computational power in an un-even manner. The allocation may be adjusted depending on the need or the allocation can be based on prioritization of tasks over other tasks.

The various applications or computer programs that are running in a computer may need to be managed by the user. The computer programs that are managed are in a running state on the computer operating system. These programs (applications) may have one or more normal user interface representations, such as a windows, for receiving input from a user and producing output to a user. There may be an active (current) program that runs in the foreground and whose application window is being displayed. Other computer programs may be running in the background, and their application windows may be hidden.

To allow the user to control the running applications, reduced representations of normal user interface representations of the computer programs may be formed. These representations may be such that the reduced representations can fit to be presented simultaneously on a display of the computer, for example miniature views of the windows of the applications or icons. To allow the user to choose the next program to switch to, the reduced representations may be displayed simultaneously to the user on a display of the computer. Then, a selection input may be received from a user for selecting the program to switch to, that is, whose normal application window is displayed.

According to example embodiments, applications may have at least two different views. The first view may be called a "normal" view i.e. when the application is running in full screen of the computer, or when the main application window is displayed in full, the application is showing the normal view. The first view of the application contains all information which the application developer has wanted to show to the user. In some applications the user can also configure what information of the application is shown to user. In some applications, also the operating system can control what information of the application is shown to the user.

An application may be configured to be able to display an application state to a user in an improved manner. To do this, the application may receive a request to produce an essential reduced representation of the application. The second view, that is, the essential reduced representation, comprises a subset of information from the application's normal user interface. The essential reduced representation may be formed by using this subset of information and presenting it in essentially normal size for optimal viewing (compared to a miniature or icon view). This essential reduced representation may then be provided to the operating system for presenting it among other essential reduced representations of other applications on a user interface. There may also be activity information formed by the operating system or by the application, and this information may be provided or used to create the essential reduced representation of the application. Such activity information may be information on system resource usage of the application such as energy consumption, processor usage or memory usage, or any combination indicative of system resource usage, or information on communication activity of the application such as number of received or sent messages, amount of received or sent data or activity in a network service to the application is connected such as a social media service.

Fig. 4 shows an example view of an application (navigation application). The navigation application is running in a mobile terminal 100. The application uses either a built-in or an online map and a location sensor of the phone. The location sensor may be a Global Positioning System (GPS) sensor for determining longitude and latitude (and height) of the terminal on a map coordinate system. The example application may have several different information items that can be presented to the user on a display. In the example, the navigator application is currently showing the route to Helsinki.

The destination information can be shown to user as in 206. The navigator may have map 210 (which can be 2D or 3D), and the map 210 can show to the user the preferred route to travel 208. There may also be shown the location of the user 214 on the map.

There can be an additional information field 212 showing, for example, the current speed (60km/h), direction of travel (North) and distance to final destination (20km). There may also be directions to the user in the form of textual information 202 instructing the user what to do next ("Turn right in 20 meters"). The textual information may be also spoken to user by using voice synthesis means. The directions may also be shown as a symbol 204 showing to the user that next turn is to the right.

The various elements of the application user interface may be passive (for only displaying information) or active (for display of information and reception of commands). That is, the application may receive input from a user through the elements of the user interface for controlling the application.

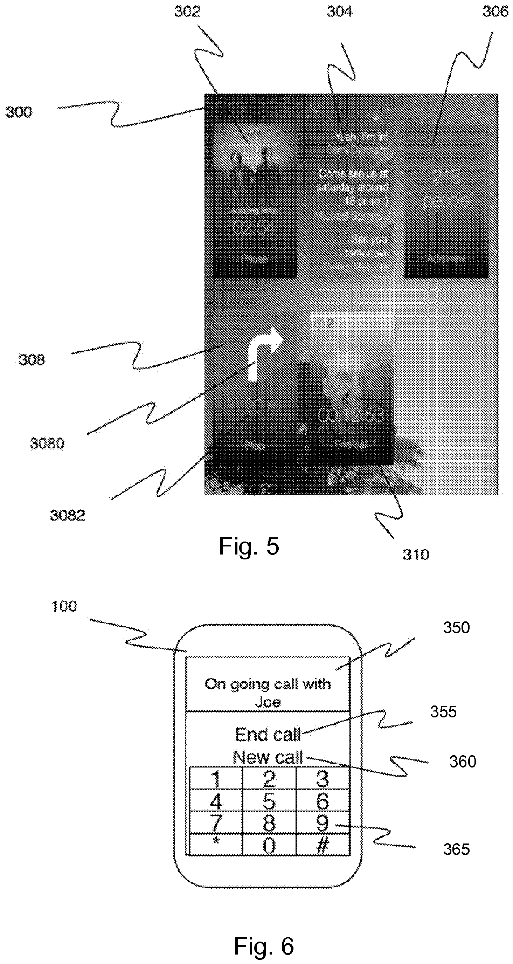

In Fig. 5, the home view, that is, the view to select and manage applications is shown, with the essential reduced representations of the applications. The view can be dynamic in the sense that it may show the currently running applications and change as their statuses change.

In some embodiments of the invention the user can switch between applications by performing a gesture, e.g. swiping the screen to one direction (right or left depending on the preference, or up or down). The application switch gesture may start from a side of the display. This gesture may be performed while the user is in a first application, that is, the application window of a first application is active. As the user performs said gesture a management view 300 is shown on the display (Fig. 5). The view 300 shows a simplified view of each (or some of the) running applications 302, 304, 306, 308, 310 in an arrangement (this can also be referred as "covers" of the applications). Applications show only the essential elements of the information content that is defined in the software, i.e. there is a library component or API (application programming interface) or similar that enables software developers to define which are "essential" information elements to be shown for the user.

Additionally, the developer of an application may also allow the user to select the information to be shown. Some of the information that is shown in the simplified view may not be shown in full view. The essential information elements are shown in the view 300.

To enable the user to "peek" into the status of applications while still in the first application, at least a part of the normal user interface representation of the first application is displayed simultaneously with the reduced representations of view 300. That is, reduced representations being indicative of states of running computer programs may be shown simultaneously with the current application's full view on the screen. This simultaneous display may happen in various ways, for example in a transparent manner such that at least one of the screen items is partially translucent to allow seeing the other items beneath it. For example, the current application may be made gradually more translucent as the gesture progresses, or alternatively or in addition, the view 300 may be made more opaque as the gesture progresses. As another example, the current application may be reduced in size or pushed to the side to reveal the view 300 showing the essential reduced representations. That is, as the user performs application toggle gesture the content of covers can be shown during the push gesture. The device status (time, remaining power etc.) may also be shown during the push gesture. The management view 300 may be shown fully, that is, the current program may be pushed to the background if a user releases the gesture sufficiently far into the gesture, for example sufficiently far from the side of the display, or by making another gesture.

The essential reduced representations may show only a part of the information of each application's full view. For the navigation application example, the simplified view 308 may show "next" instruction symbol 3080 (corresponding to the same information 204 in full view of the application) and textual information of "in 20 m" 3082 (corresponding to the same information 202 in the full view). Another example of a simplified view 310 is that of a calling application. The application is configured to show in the simplified view duration of the call, picture of the person in a call and also a button to control the phone call. In the on-going phone call example, the button (user interface element to be controlled with touch screen) may be "End call" for ending the call. The simplified view of an application may include graphical elements, text, images and control functionalities. The simplified view may include dynamic content that may change as the view 300 is shown to the user. The cover may show filtered and live content, for example a video may be run in a cover in a simplified view.

To show the view 300, the operating system of the computer may receive an essential reduced representation for a running computer program where the essential reduced representation comprises a subset of information from the second computer program presented in essentially normal size. This essential reduced representation may be formed by the computer program application itself, or it may be created by another application, or it may be created by the operating system. This essential reduced representation is the displayed to a user simultaneously with the (full-size) representation of the current program. The operating system (and/or the application) may also be arranged to receive input from the user through the essential reduced representation (e.g. 310) of an application for controlling the application based on the received input. In this way, displaying the normal user interface representation of the application may be avoided.

If the user taps the example simplified view 310, the full view of the phone application is shown to user. The phone application may for example contain information on on-going activity "On going call with Joe" 350, selectable user interface "buttons" 355 for ending the call and 360 for making another call and for example dial pad 365, as shown in Fig. 6.

Additionally, if the user keeps the finger long time in top of the simplified view 310 of Fig. 5, a pop up menu or other menu structure may be presented to the user to allow controlling the applications. The user may use the menu to close the application, pause the application, swap to the application, flip to another reduced view of the application etc. Additional ways to interact with reduced simplified views of applications may be the use of different gestures such as swiping the finger from left to right (or right to left) or from top to bottom (or bottom to top) within the reduced application view 310. For example, swiping from left to right with in application view 302 of music application may be used to change the song to next song in the play list. Additional example may be swiping the application view 302 of the application, e.g. a music or video player application, from top to bottom to mute the audio of that application.

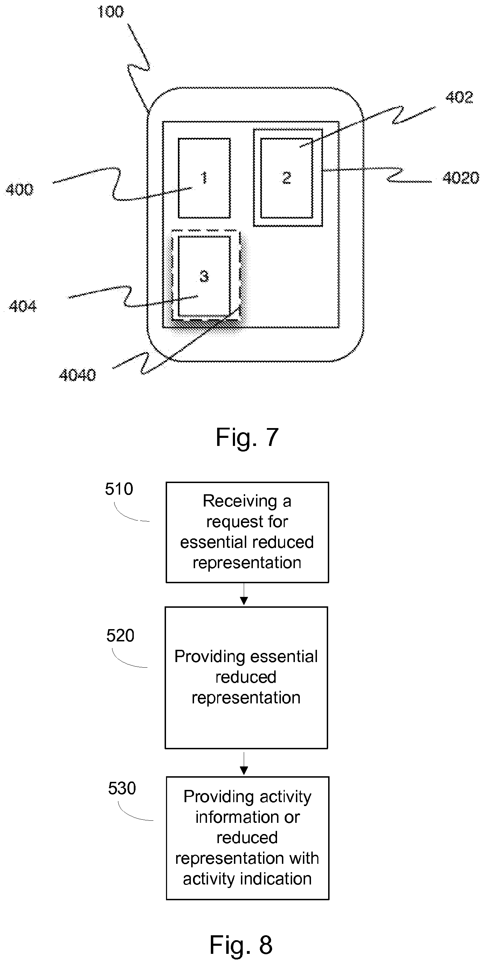

Fig. 7 shows a reduced representation with a resource usage indication (indication of consumed power). That is, the reduced representation view 300 may have a graphical representation of e.g. consumed computational power of each application. Consumed power indicator may also mean or contain information on memory usage, battery usage and so on. According to embodiments of the invention the simplified views of the applications may include colour or illumination indications or other graphical indicators as shown in Fig. 7. The smart phone 100 is in the management view mode i.e. showing simplified views of the applications 1, 2 and 3 (400, 402, 404 respectively). The application 1 consumes relatively low power i.e. no special indicator is used. The application 402 consumes relatively high amount of smart phone resources (power, memory, energy etc.), and an indicator 4020 around the reduced application representation 402 is shown. The indicator may be for example a glow around the reduced representation or it can be implemented by adjusting illumination level behind the reduced representation. Reduced representation of application 404 is consuming medium amount of resources and thus a different indicator 4040 is shown in connection of the application. Also other information than consumed resources may be indicated, e.g. the communication activity of an application.

In order to indicate the activity (resource or communication activity), the operating system or another application, or each running application may form activity information relating to the application. This information may then be used by the operating system or by the application to form the reduced representation of the application for indicating activity of the application to the user. The activity information may comprise information on system resource usage of the application such as energy consumption, processor usage or memory usage, or any combination indicative of system resource usage. The activity information may comprise information on communication activity of the application such as number of received or sent messages, amount of received or sent data or activity in a network service to which the application is connected such as a social media service.

The embodiments of the invention may enable easier multitasking via meaningful thumbnails of the applications (covers / reduced representations), i.e. user knows more easily what is going on in the background applications thus providing more intuitive user interface. The embodiments may also enable to interact with an application without opening the application (or toggling to the full view).

Fig. 8 shows a flow chart of a method for showing application status. An application may have special capabilities for showing its status to the user. For this, the application may be arranged to respond to the operating system when it requests status information. In phase 510, the request for essential reduced representation is received, as explained earlier. Based on defaults, operating system settings or user settings, the essential reduced representation is produced in phase 520. In phase 530, also activity information or the reduced representation modified with the activity information may be provided to be displayed.

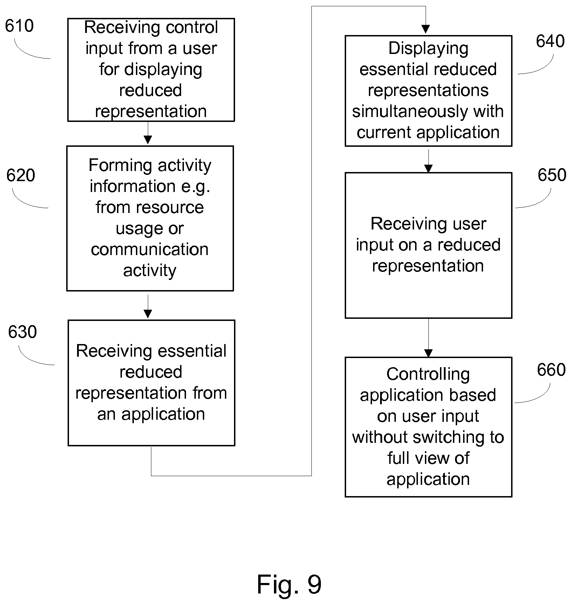

Fig. 9 shows a flow chart of a method for managing applications on a computer. In phase 610, control input from a user is received e.g. in the form of settings, to control the display of reduced representation views of one or more applications. That is, the user may set which information is to be displayed in the reduced representation. In phase 620, activity information may be formed as explained earlier. In phase 630, an essential reduced representation of an application may be received from an application, or such a representation may be formed from information received from the application. In phase 640, the essential reduced representations may be displayed simultaneously with the current applications full view, e.g. in a transparent manner, as explained earlier. In phase 650, user input may be received via a reduced representation of an application, that is, the reduced representation may be interactive. In phase 660, an application may be controlled using this input.

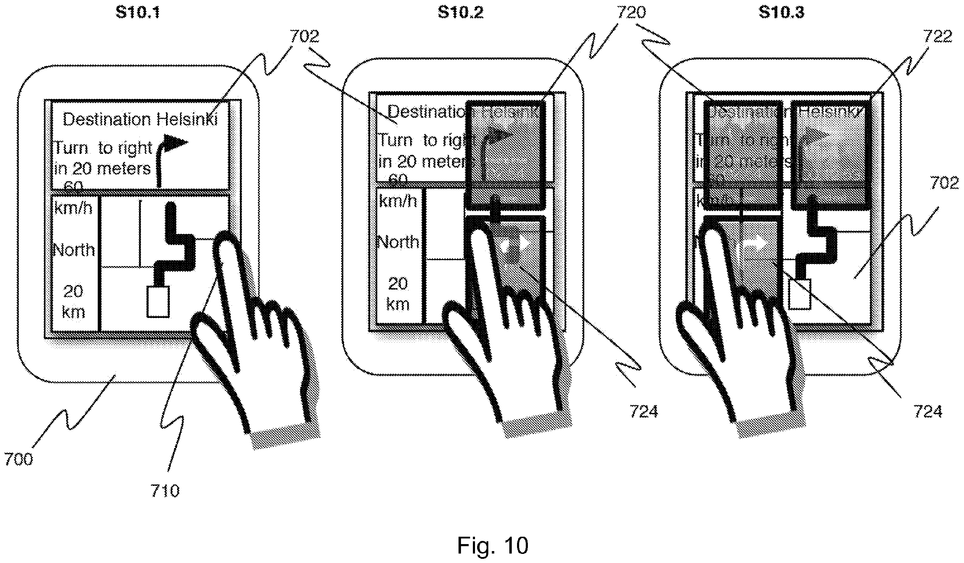

Fig. 10 shows an example of a peek view. Step S10.1 shows a user interface of apparatus 700 with a touch interface. Before the user performs a swipe gesture from left to right with finger or another pointer 710, the display of the apparatus 700 may show a view of normal user interface view 702 of the application that is currently running as an active, topmost application (in an example, a navigation application). Step S10.2 shows snap shot of the situation where the finger 710 of the user has moved partially from left to right. At this time, essential reduced representations 720 and 724 of other applications are shown. The reduced representations may be slid in from the right along with the movement of the finger/pointer. If user decides to stop the gesture by either removing (lifting up) the finger from the display or by moving the finger back to the right, the normal view of the application 702 is again shown to the user, and the reduced representations are removed from view.

In step S10.3, the user has moved the finger further to the left of the display and the reduced representations 720, 724 and 722 are now shown over the user interface of the application 702. The reduced representations may be shown in a transparent manner. Transparency may be implemented for example by adjusting the alpha channel value of the reduced representation views (alpha channel may be used in computer graphics to indicate the level of opacity/transparency of a pixel or graphical element). Now, if the user removes the finger from the screen, the reduced representations are kept in the user interface to allow interaction with them and/or the applications they represent. If the user decides to go back to the application view 702, he can perform a user interface gesture of swiping the finger back to the right of the display.

Based on embodiments the normal user interface view 702 may be dimmed during user interface gesture (of steps S10.2 and S10.3) and the reduced representations may be made more visible during the gesture.

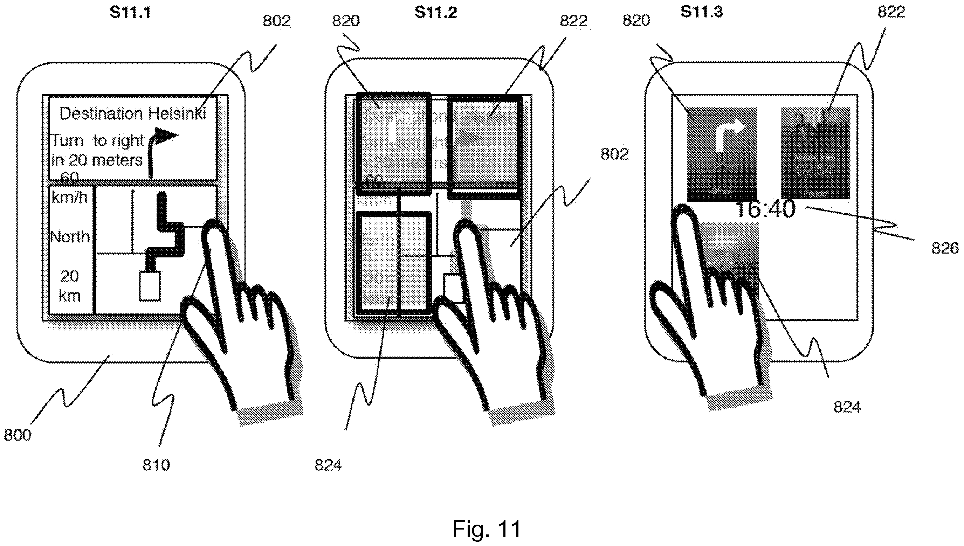

Fig. 11 shows an example of a peek view . Step S11.1 shows a user interface of apparatus 800 before the user performs a swipe gesture from left to right with finger or pointer 810. The display of the apparatus 800 may show a view of normal user interface view 802 of the application that is currently running as an active, topmost application (for example, a navigation application). The application is fully visible at the start of the gesture, and the alpha channel value (i.e. the parameter defining opacity of the graphical object) is initially 1 for the normal user interface view 802. The reduced views of the applications are not initially visible to the user.

Step S11.2 shows view of the situation where the finger 810 of the user has moved approximately one third of the distance from left to right. The essentially reduced representations 820, 822 and 824 of other applications are shown transparently. The transparency level of the applications may be set e.g. using the alpha channel for the reduced representations 820, 822, and 824. For example, the alpha channel value may be set to a value of 0.33 for the reduced representations , as the finger is about 1/3=0.33 way from the left to right. The alpha channel value of user interface of the application 802 may be modified accordingly to value of 1.0-0.33 = 0.66. If the user decides to stop the gesture by either removing the finger from the display or by moving the finger back to the right, the normal view of the application 802 is shown to the user by changing the alpha channel value back to 1.0 for the application and changing the alpha channel value of the reduced views to 0.0 and/or removing the reduced representations from the screen.

In step S11.3 the user has moved the finger further to the left of the display, and the reduced representations 820, 822 and 824 are shown on the display without transparency, i.e. their alpha channel value is 1.0, or with transparency set to a preset maximum (that may be user-configurable) for the representations. The alpha value of the user interface view of the application 802 may be set to 0.0 and/or the view may be thus removed entirely from the screen. The background image 826 may be shown on the screen or the background may be visible since the sum of alpha channel values of user interface view on top falls below 1.0. The background image may be an image or for example an active element such as clock or network status indicator. Now, if the user removes the finger from the screen, the reduced representations are kept in the user interface for interaction. If the user decides to go back to the application view 802, he can perform a user interface gesture of swiping the finger back to the right of the display.

In other words, the normal user interface view 802 may be dimmed during a user interface gesture (which may be from any direction) and the reduced representations may be made more visible during the gesture. The relative alpha channel value of a normal user interface view and the reduced representation 820, 822, 824views may be a function of position of finger (or stylus) on the touch screen.
The various embodiments of the invention can be implemented with the help of computer program code that resides in a memory and causes the relevant apparatuses to carry out the invention. For example, a computer may comprise circuitry and electronics for handling, receiving and transmitting data, a computer program code in a memory, and a processor which, when running the computer program code, causes the computer to carry out the features of an embodiment, e.g. method steps.

It is clear that the present invention is not limited solely to the above-presented embodiments, but it can be modified within the scope of the appended claims.

## Claims

1. A method for managing computer programs in a computer, said computer programs being in a running state on a computer operating system and said computer programs having at least one normal user interface representation (702), such as a window, for receiving input from a user and producing output to a user, said computer programs comprising a first program and a second program, said method comprising:
- forming reduced representations (720, 722, 724) of said normal user interface representations (702) of said computer programs such that said reduced representations can fit to be presented simultaneously on a display (1010) of said computer,
- displaying said reduced representations simultaneously to a user on a display (1010) of said computer,
- receiving (650) a selection input from a user for selecting a reduced representation of a second computer program for providing a normal user interface representation of said second program to a user in response to said selection input,
wherein the method comprises:
- displaying (640) at least a part of said normal user interface representation of said first program simultaneously with said reduced representations, said reduced representations being indicative of states of said computer programs, and
- forming (620) activity information relating to at least said second program, and forming said reduced representation of said second program to comprise indication (4020, 4040) of said activity information for indicating activity of said second program to the user, wherein said activity information comprises information on system resource usage of said second program such as energy consumption, processor usage or memory usage, or any combination indicative of system resource usage.

2. A method according to claim 1, comprising at least one of the following:
- displaying at least part of said normal user interface representation (702) of said first program with said reduced representations (720, 722, 724) in a transparent manner such that at least one of said representations is partially translucent to allow seeing another said representation beneath;
- setting a transparency value of said at least one of said reduced representations (720, 722, 724) as a function of the position of the pointer on the screen along a gesture by modifying an alpha channel value of said reduced representation;
- displaying a part of said reduced representations (720, 722, 724) so that the reduced representations obstruct only a part of the screen leaving a part of the screen unobstructed for said normal user interface;
- receiving an essential reduced representation (720, 722, 724) for said second computer program wherein said essential reduced representation comprises a subset of information from said second computer program presented in essentially normal size, and displaying said essential reduced representation to a user simultaneously with said representation (702) of said first program;
- receiving user input on which information of information from said second computer program or activity information to include in said essential reduced representation (720, 722, 724).

3. A method according to claim 2, comprising:
- receiving input from a user through said essential reduced representation (720, 722, 724) of said second computer program for controlling said second computer program based on said received input such that displaying said normal user interface representation (702) of said second computer program can be avoided.

4. A method according to claim 1, wherein said activity information comprises information on communication activity of said second program such as number of received or sent messages, amount of received or sent data or activity in a network service to which said second program is connected such as a social media service.

5. A computer operating system product embodied on a non-transitory computer readable medium for managing computer programs in a computer, said computer programs being in a running state on a computer operating system and said computer programs having at least one normal user interface representation, such as a window, for receiving input from a user and producing output to a user, said computer programs comprising a first program and a second program, said computer operating system product comprising computer program code that, when executed on a processor, causes said computer to:
- form reduced representations (720, 722, 724) of said normal user interface representations (702) of said computer programs such that said reduced representations can fit to be presented simultaneously on a display (1010) of said computer,
- display said reduced representations simultaneously to a user on a display (1010) of said computer,
- receive a selection input from a user for selecting a reduced representation of a second computer program for providing a normal user interface representation of said second program to a user in response to said selection input,
- display at least a part of said normal user interface representation of said first program simultaneously with said reduced representations, said reduced representations being indicative of states of said computer programs,
- form activity information relating to at least said second program, and form said reduced representation of said second program to comprise indication (4020, 4040) of said activity information for indicating activity of said second program to the user, wherein said activity information comprises information on system resource usage of said second program such as energy consumption, processor usage or memory usage, or any combination indicative of system resource usage.

6. A product according to claim 5, comprising computer program code to perform at least one of the following:
- display at least part of said normal user interface representation (702) of said first program with said reduced representations (720, 722, 724) in a transparent manner such that at least one of said representations is partially translucent to allow seeing another said representation beneath;
- set a transparency value of said at least one of said reduced representations (720, 722, 724) as a function of the position of the pointer on the screen along a gesture by modifying an alpha channel value of said reduced representation;
- display a part of said reduced representations (720, 722, 724) so that the reduced representations obstruct only a part of the screen leaving a part of the screen unobstructed for said normal user interface (702);
- receive an essential reduced representation (720, 722, 724) for said second computer program wherein said essential reduced representation comprises a subset of information from said second computer program presented in essentially normal size, and display said essential reduced representation to a user simultaneously with said representation (702) of said first program;
- receive input from a user through said essential reduced representation (720, 722, 724) of said second computer program for controlling said second computer program based on said received input such that displaying said normal user interface representation (702) of said second computer program can be avoided;
- receive user input on which information of information from said second computer program or activity information to include in said essential reduced representation (720, 722, 724).

7. A product according to claim 5, wherein said activity information comprises information on communication activity of said second program such as number of received or sent messages, amount of received or sent data or activity in a network service to which said second program is connected such as a social media service.

8. A computer comprising a user interface (2030), a processor (2020) and memory (2010), said computer being adapted to manage computer programs in said computer, said computer programs being in a running state on a computer operating system and said computer programs having at least one normal user interface representation (702), such as a window, for receiving input from a user and producing output to a user, said computer programs comprising a first program and a second program, said computer comprising computer program code in said memory (2010) that, when executed on a processor (2020), causes said computer to:
- form reduced representations (720, 722, 724) of said normal user interface representations of said computer programs such that said reduced representations can fit to be presented simultaneously on a display (1010) of said computer,
- display said reduced representations simultaneously to a user on a display (1010) of said computer,
- receive a selection input from a user for selecting a reduced representation of a second computer program for providing a normal user interface representation of said second program to a user in response to said selection input,
- display at least a part of said normal user interface representation of said first program simultaneously with said reduced representations, said reduced representations being indicative of states of said computer programs;
- form activity information relating to at least said second program, and form said reduced representation of said second program to comprise indication of said activity information for indicating activity of said second program to the user, wherein said activity information comprises information on system resource usage of said second program such as energy consumption, processor usage or memory usage, or any combination indicative of system resource usage.

9. A computer according to claim 8, comprising computer program code to perform at least one of the following:
- display at least part of said normal user interface representation (702) of said first program with said reduced representations (720, 722, 724) in a transparent manner such that at least one of said representations is partially translucent to allow seeing another said representation beneath;
- set a transparency value of said at least one of said reduced representations (720, 722, 724) as a function of the position of the pointer on the screen along a gesture by modifying an alpha channel value of said reduced representation;
- display a part of said reduced representations (720, 722, 724) so that the reduced representations obstruct only a part of the screen leaving a part of the screen unobstructed for said normal user interface (702);
- receive an essential reduced representation (720, 722, 724) for said second computer program wherein said essential reduced representation comprises a subset of information from said second computer program presented in essentially normal size, and display said essential reduced representation to a user simultaneously with said representation (702) of said first program;
- receive input from a user through said essential reduced representation (720, 722, 724) of said second computer program for controlling said second computer program based on said received input such that displaying said normal user interface representation (702) of said second computer program can be avoided;
- receive user input on which information of information from said second computer program or activity information to include in said essential reduced representation (720, 722, 724).

10. A computer according to claim 8, wherein said activity information comprises information on communication activity of said second program such as number of received or sent messages, amount of received or sent data or activity in a network service to which said second program is connected such as a social media service.

## Patentansprüche

1. Verfahren zum Verwalten von Computerprogrammen in einem Computer, wobei sich die Computerprogramme in einem laufenden Zustand auf einem Computerbetriebssystem befinden und die Computerprogramme mindestens eine normale Benutzerschnittstellendarstellung (702), beispielsweise ein Fenster, zum Empfangen von Eingaben von einem Benutzer und Erzeugen von Ausgaben an einen Benutzer aufweisen, wobei die Computerprogramme ein erstes Programm und ein zweites Programm umfassen, wobei das Verfahren Folgendes umfasst:
- Erstellen von verkleinerten Darstellungen (720, 722, 724) der normalen Benutzerschnittstellendarstellungen (702) der Computerprogramme, sodass sich die verkleinerten Darstellungen für eine gleichzeitige Darstellung auf einer Anzeige (1010) des Computers eignen können,
- gleichzeitiges Anzeigen der verkleinerten Darstellungen für einen Benutzer auf einer Anzeige (1010) des Computers,
- Empfangen (650) einer Auswahleingabe von einem Benutzer zum Auswählen einer verkleinerten Darstellung eines zweiten Computerprogramms, damit einem Benutzer als Reaktion auf die Auswahleingabe eine normale Benutzerschnittstellendarstellung des zweiten Programms bereitgestellt wird,
wobei das Verfahren Folgendes umfasst:
- Anzeigen (640) von zumindest einem Teil der normalen Benutzerschnittstellendarstellung des ersten Programms gleichzeitig mit den verkleinerten Darstellungen, wobei die verkleinerten Darstellungen Zustände der Computerprogramme anzeigen, und
- Erstellen (620) von auf zumindest das zweite Programm bezogenen Aktivitätsinformationen und Erstellen der verkleinerten Darstellung des zweiten Programms derart, dass sie ein Anzeigeelement (4020, 4040) zu den Aktivitätsinformationen umfasst, mit dem dem Benutzer die Aktivität des zweiten Programms angezeigt wird, wobei die Aktivitätsinformationen Informationen über die Nutzung der Systemressourcen durch das zweite Programm umfassen, beispielsweise Energieverbrauch, Prozessornutzung oder Speichernutzung oder jede beliebige Kombination, die die Nutzung der Systemressourcen anzeigt.

2. Verfahren nach Anspruch 1, das mindestens eins von Folgendem umfasst:
- Anzeigen von zumindest einem Teil der normalen Benutzerschnittstellendarstellung (702) des ersten Programms mit den verkleinerten Darstellungen (720, 722, 724) auf durchsichtige Art und Weise, sodass mindestens eine der Darstellungen teilweise durchscheinend ist, damit eine weitere Darstellung darunter erkennbar ist;
- Einstellen eines Transparenzwerts der mindestens einen von den verkleinerten Darstellungen (720, 722, 724) in Abhängigkeit von der Position des Zeigers auf dem Bildschirm entlang einer Geste durch Abändern eines Alphakanal-Werts der verkleinerten Darstellung;
- Anzeigen eines Teils der verkleinerten Darstellungen (720, 722, 724), sodass die verkleinerten Darstellungen lediglich einen Teil des Bildschirms verdecken und einen Teil des Bildschirms für die normale Benutzerschnittstelle frei lassen;
- Empfangen einer verkleinerten Darstellung (720, 722, 724) des Wesentlichen für das zweite Computerprogramm, wobei die verkleinerte Darstellung des Wesentlichen eine Teilmenge von Informationen von dem zweiten Computerprogramm umfasst, die in im Wesentlichen normaler Größe dargestellt wird, und Anzeigen der verkleinerten Darstellung des Wesentlichen gleichzeitig mit der Darstellung (702) des ersten Programms für einen Benutzer;
- Empfangen von Benutzereingaben darüber, welche Informationen aus Informationen von dem zweiten Computerprogramm oder Aktivitätsinformationen in der verkleinerten Darstellung (720, 722, 724) des Wesentlichen enthalten sein sollen.

3. Verfahren nach Anspruch 2, umfassend:
- Empfangen von Eingaben von einem Benutzer über die verkleinerte Darstellung (720, 722, 724) des Wesentlichen des zweiten Computerprogramms zum Steuern des zweiten Computerprogramms auf Grundlage der empfangenen Eingaben derart, dass ein Anzeigen der normalen Benutzerschnittstellendarstellung (702) des zweiten Computerprogramms verhindert werden kann.

4. Verfahren nach Anspruch 1, wobei die Aktivitätsinformationen Informationen über die Datenübertragungsaktivität des zweiten Programms umfassen, beispielsweise die Anzahl empfangener oder gesendeter Nachrichten, die Menge empfangener oder gesendeter Daten oder die Aktivität in einem Netzwerkdienst, mit dem das zweite Programm verbunden ist, beispielsweise einem Social-Media-Dienst.

5. Computerbetriebssystemprodukt, das auf einem nicht flüchtigen computerlesbaren Medium verkörpert ist, zum Verwalten von Computerprogrammen in einem Computer, wobei sich die Computerprogramme in einem laufenden Zustand auf einem Computerbetriebssystem befinden und die Computerprogramme mindestens eine normale Benutzerschnittstellendarstellung, beispielsweise ein Fenster, zum Empfangen von Eingaben von einem Benutzer und Erzeugen von Ausgaben an einen Benutzer aufweisen, wobei die Computerprogramme ein erstes Programm und ein zweites Programm umfassen, wobei das Computerbetriebssystemprodukt Computerprogrammcode umfasst, der bei Ausführung auf einem Prozessor bewirkt, dass der Computer:
- verkleinerte Darstellungen (720, 722, 724) der normalen Benutzerschnittstellendarstellungen (702) der Computerprogramme derart erstellt, dass sich die verkleinerten Darstellungen für eine gleichzeitige Darstellung auf einer Anzeige (1010) des Computers eignen können,
- die verkleinerten Darstellungen gleichzeitig für einen Benutzer auf einer Anzeige (1010) des Computers anzeigt,
- eine Auswahleingabe von einem Benutzer zum Auswählen einer verkleinerten Darstellung eines zweiten Computerprogramms empfängt, damit einem Benutzer als Reaktion auf die Auswahleingabe eine normale Benutzerschnittstellendarstellung des zweiten Programms bereitgestellt wird,
- zumindest einen Teil der normalen Benutzerschnittstellendarstellung des ersten Programms gleichzeitig mit den verkleinerten Darstellungen anzeigt, wobei die verkleinerten Darstellungen Zustände der Computerprogramme anzeigen,
- auf zumindest das zweite Programm bezogene Aktivitätsinformationen erstellt und die verkleinerte Darstellung des zweiten Programms derart erstellt, dass sie ein Anzeigeelement (4020, 4040) zu den Aktivitätsinformationen umfasst, mit dem die Aktivität des zweiten Programms dem Benutzer angezeigt wird, wobei die Aktivitätsinformationen Informationen über die Nutzung der Systemressourcen durch das zweite Programm umfassen, beispielsweise Energieverbrauch, Prozessornutzung oder Speichernutzung oder jede beliebige Kombination, die die Nutzung der Systemressourcen anzeigt.

6. Produkt nach Anspruch 5, das Computerprogrammcode zum Durchführen von mindestens einem aus Folgendem umfasst:
- Anzeigen von zumindest einem Teil der normalen Benutzerschnittstellendarstellung (702) des ersten Programms mit den verkleinerten Darstellungen (720, 722, 724) auf durchsichtige Art und Weise, sodass mindestens eine der Darstellungen teilweise durchscheinend ist, damit eine weitere Darstellung darunter erkennbar ist;
- Einstellen eines Transparenzwerts der mindestens einen der verkleinerten Darstellungen (720, 722, 724) in Abhängigkeit von der Position des Zeigers auf dem Bildschirm entlang einer Geste durch Abändern eines Alphakanal-Werts der verkleinerten Darstellung;
- Anzeigen eines Teils der verkleinerten Darstellungen (720, 722, 724), sodass die verkleinerten Darstellungen lediglich einen Teil des Bildschirms verdecken und einen Teil des Bildschirms für die normale Benutzerschnittstelle (702) frei lassen;
- Empfangen einer verkleinerten Darstellung (720, 722, 724) des Wesentlichen für das zweite Computerprogramm, wobei die verkleinerte Darstellung des Wesentlichen eine Teilmenge von Informationen von dem zweiten Computerprogramm umfasst, die in im Wesentlichen normaler Größe dargestellt wird, und Anzeigen der verkleinerten Darstellung des Wesentlichen gleichzeitig mit der Darstellung (702) des ersten Programms für einen Benutzer;
- Empfangen von Eingaben von einem Benutzer über die verkleinerte Darstellung (720, 722, 724) des Wesentlichen des zweiten Computerprogramms zum Steuern des zweiten Computerprogramms auf Grundlage der empfangenen Eingaben derart, dass ein Anzeigen der normalen Benutzerschnittstellendarstellung (702) des zweiten Computerprogramms verhindert werden kann;
- Empfangen von Benutzereingaben darüber, welche Informationen aus Informationen von dem zweiten Computerprogramm oder Aktivitätsinformationen in der verkleinerten Darstellung (720, 722, 724) des Wesentlichen enthalten sein sollen.

7. Produkt nach Anspruch 5, wobei die Aktivitätsinformationen Informationen über die Datenübertragungsaktivität des zweiten Programms umfassen, beispielsweise die Anzahl empfangener oder gesendeter Nachrichten, die Menge empfangener oder gesendeter Daten oder die Aktivität in einem Netzwerkdienst, mit dem das zweite Programm verbunden ist, beispielsweise einem Social-Media-Dienst.

8. Computer, das eine Benutzerschnittstelle (2030), einen Prozessor (2020) und Speicher (2010) umfasst, wobei der Computer so ausgelegt ist, dass er Computerprogramme in dem Computer verwaltet, wobei sich die Computerprogramme in einem laufenden Zustand auf einem Computerbetriebssystem befinden und die Computerprogramme mindestens eine normale Benutzerschnittstellendarstellung (702), beispielsweise ein Fenster, zum Empfangen von Eingaben von einem Benutzer und Erzeugen von Ausgaben an einen Benutzer aufweisen, wobei die Computerprogramme ein erstes Programm und ein zweites Programm umfassen, wobei der Computer Computerprogrammcode in dem Speicher (2010) umfasst, der bei Ausführung auf einem Prozessor (2020) bewirkt, dass der Computer:
- verkleinerte Darstellungen (720, 722, 724) der normalen Benutzerschnittstellendarstellungen der Computerprogramme derart erstellt, dass sich die verkleinerten Darstellungen für eine gleichzeitige Darstellung auf einer Anzeige (1010) des Computers eignen können,
- die verkleinerten Darstellungen gleichzeitig für einen Benutzer auf einer Anzeige (1010) des Computers anzeigt,
- eine Auswahleingabe von einem Benutzer zum Auswählen einer verkleinerten Darstellung eines zweiten Computerprogramms empfängt, damit einem Benutzer als Reaktion auf die Auswahleingabe eine normale Benutzerschnittstellendarstellung des zweiten Programms bereitgestellt wird,
- zumindest einen Teil der normalen Benutzerschnittstellendarstellung des ersten Programms gleichzeitig mit den verkleinerten Darstellungen anzeigt, wobei die verkleinerten Darstellungen Zustände der Computerprogramme anzeigen,
- auf zumindest das zweite Programm bezogene Aktivitätsinformationen erstellt und die verkleinerte Darstellung des zweiten Programms derart erstellt, dass sie ein Anzeigeelement zu den Aktivitätsinformationen umfasst, mit dem die Aktivität des zweiten Programms dem Benutzer angezeigt wird, wobei die Aktivitätsinformationen Informationen über die Nutzung der Systemressourcen durch das zweite Programm umfassen, beispielsweise Energieverbrauch, Prozessornutzung oder Speichernutzung oder jede beliebige Kombination, die die Nutzung der Systemressourcen anzeigt.

9. Computer nach Anspruch 8, das Computerprogrammcode zum Durchführen von mindestens einem aus Folgendem umfasst:
- Anzeigen von zumindest einem Teil der normalen Benutzerschnittstellendarstellung (702) des ersten Programms mit den verkleinerten Darstellungen (720, 722, 724) auf durchsichtige Art und Weise, sodass mindestens eine der Darstellungen teilweise durchscheinend ist, damit eine weitere Darstellung darunter erkennbar ist;
- Einstellen eines Transparenzwerts der mindestens einen der verkleinerten Darstellungen (720, 722, 724) in Abhängigkeit von der Position des Zeigers auf dem Bildschirm entlang einer Geste durch Abändern eines Alphakanal-Werts der verkleinerten Darstellung;
- Anzeigen eines Teils der verkleinerten Darstellungen (720, 722, 724), sodass die verkleinerten Darstellungen lediglich einen Teil des Bildschirms verdecken und einen Teil des Bildschirms für die normale Benutzerschnittstelle (702) frei lassen;
- Empfangen einer verkleinerten Darstellung (720, 722, 724) des Wesentlichen für das zweite Computerprogramm empfängt, wobei die verkleinerte Darstellung des Wesentlichen eine Teilmenge von Informationen von dem zweiten Computerprogramm umfasst, die in im Wesentlichen normaler Größe dargestellt wird, und Anzeigen der verkleinerten Darstellung des Wesentlichen gleichzeitig mit der Darstellung (702) des ersten Programms für einen Benutzer;
- Empfangen von Eingaben von einem Benutzer über die verkleinerte Darstellung (720, 722, 724) des Wesentlichen des zweiten Computerprogramms zum Steuern des zweiten Computerprogramms auf Grundlage der empfangenen Eingaben derart, dass ein Anzeigen der normalen Benutzerschnittstellendarstellung (702) des zweiten Computerprogramms verhindert werden kann;
- Empfangen von Benutzereingaben darüber, welche Informationen aus Informationen von dem zweiten Computerprogramm oder Aktivitätsinformationen in der verkleinerten Darstellung (720, 722, 724) des Wesentlichen enthalten sein sollen.

10. Computer nach Anspruch 8, wobei die Aktivitätsinformationen Informationen über die Datenübertragungsaktivität des zweiten Programms umfassen, beispielsweise die Anzahl empfangener oder gesendeter Nachrichten, die Menge empfangener oder gesendeter Daten oder die Aktivität in einem Netzwerkdienst, mit dem das zweite Programm verbunden ist, beispielsweise einem Social-Media-Dienst.

## Revendications

1. Procédé de gestion de programmes informatiques dans un ordinateur, lesdits programmes informatiques étant dans un état d'exécution sur un système d'exploitation informatique et lesdits programmes informatiques comportant au moins une représentation normale d'interface utilisateur (702), telle qu'une fenêtre, pour recevoir une entrée de la part d'un utilisateur et générer une sortie pour un utilisateur, lesdits programmes informatiques comprenant un premier programme et un second programme, ledit procédé comprenant :
- la formation de représentations réduites (720, 722, 724) desdites représentations normales d'interface utilisateur (702) desdits programmes informatiques de telle sorte que lesdites représentations réduites peuvent s'ajuster de manière à être présentées simultanément sur un écran (1010) dudit ordinateur,
- l'affichage desdites représentations réduites simultanément sur un écran (1010) dudit ordinateur pour un utilisateur,
- la réception (650) d'une entrée de sélection de la part d'un utilisateur pour sélectionner une représentation réduite d'un second programme informatique pour fournir à un utilisateur une représentation normale d'interface utilisateur dudit second programme en réaction à ladite entrée de sélection,
le procédé comprenant :
- l'affichage (640) d'au moins une partie de ladite représentation normale d'interface utilisateur dudit premier programme simultanément avec lesdites représentations réduites, lesdites représentations réduites indiquant des états desdits programmes informatiques, et
- la formation (620) d'informations d'activité en rapport avec au moins ledit second programme, et la formation de ladite représentation réduite dudit second programme afin qu'elle comprenne une indication (4020, 4040) desdites informations d'activité pour indiquer à l'utilisateur l'activité dudit second programme, lesdites informations d'activité comprenant des informations sur l'utilisation des ressources du système par ledit second programme telles que la consommation d'énergie, l'utilisation du processeur ou l'utilisation de la mémoire, ou toute combinaison indiquant l'utilisation des ressources du système.

2. Procédé selon la revendication 1, comprenant au moins une des étapes suivantes :
- l'affichage d'au moins une partie de ladite représentation normale d'interface utilisateur (702) dudit premier programme avec lesdites représentations réduites (720, 722, 724) de manière transparente de telle sorte qu'au moins une desdites représentations est partiellement translucide pour permettre de voir une autre représentation en dessous ;
- le réglage d'une valeur de transparence de ladite au moins une desdites représentations réduites (720, 722, 724) en fonction de la position du pointeur sur l'écran le long d'un geste en modifiant une valeur de canal alpha de ladite représentation réduite ;
- l'affichage d'une partie desdites représentations réduites (720, 722, 724) de telle sorte que les représentations réduites obstruent uniquement une partie de l'écran en laissant une partie de l'écran libre pour ladite interface utilisateur normale ;
- la réception d'une représentation réduite (720, 722, 724) essentielle pour ledit second programme informatique, ladite représentation réduite essentielle comprenant un sous-ensemble d'informations provenant dudit second programme informatique présenté dans une taille sensiblement normale, et l'affichage de ladite représentation réduite essentielle pour un utilisateur simultanément avec ladite représentation (702) dudit premier programme ;
- la réception d'une entrée de la part de l'utilisateur concernant quelles informations d'informations provenant dudit second programme informatique ou d'informations d'activités sont à inclure dans ladite représentation réduite (720, 722, 724) essentielle.

3. Procédé selon la revendication 2, comprenant :
- la réception d'une entrée de la part d'un utilisateur à travers ladite représentation réduite (720, 722, 724) essentielle dudit second programme informatique pour commander ledit second programme informatique sur la base de ladite entrée reçue de telle sorte que l'affichage de ladite représentation normale d'interface utilisateur (702) dudit second programme informatique peut être évité.

4. Procédé selon la revendication 1, dans lequel lesdites informations d'activité comprennent des informations sur l'activité de communication dudit second programme telles qu'un nombre de messages reçus ou envoyés, une quantité de données reçues ou envoyées ou l'activité dans un service de réseau auquel est connecté le second programme, tel qu'un service de médias sociaux.

5. Produit de système d'exploitation informatique incorporé sur un support non volatile lisible par ordinateur, destiné à la gestion de programmes informatiques dans un ordinateur, lesdits programmes informatiques étant dans un état d'exécution sur un système d'exploitation informatique et lesdits programmes informatiques comportant au moins une représentation normale d'interface utilisateur, telle qu'une fenêtre, pour recevoir une entrée de la part d'un utilisateur et générer une sortie pour un utilisateur, lesdits programmes informatiques comprenant un premier programme et un second programme, ledit produit de système d'exploitation informatique comprenant du code de programme informatique qui, quand il est exécuté sur un processeur, amène ledit ordinateur à :
- former des représentations réduites (720, 722, 724) desdites représentations normales d'interface utilisateur (702) desdits programmes informatiques de telle sorte que lesdites représentations réduites peuvent s'ajuster de manière à être présentées simultanément sur un écran (1010) dudit ordinateur,
- afficher lesdites représentations réduites simultanément sur un écran (1010) dudit ordinateur pour un utilisateur,
- recevoir une entrée de sélection de la part d'un utilisateur pour sélectionner une représentation réduite d'un second programme informatique pour fournir à un utilisateur une représentation normale d'interface utilisateur dudit second programme en réaction à ladite entrée de sélection,
- afficher au moins une partie de ladite représentation normale d'interface utilisateur dudit premier programme simultanément avec lesdites représentations réduites, lesdites représentations réduites indiquant des états desdits programmes informatiques,
- former des informations d'activité en rapport avec au moins ledit second programme, et former ladite représentation réduite dudit second programme afin qu'elle comprenne une indication (4020, 4040) desdites informations d'activité pour indiquer à l'utilisateur l'activité dudit second programme, lesdites informations d'activité comprenant des informations sur l'utilisation des ressources du système par ledit second programme telles que la consommation d'énergie, l'utilisation du processeur ou l'utilisation de la mémoire, ou toute combinaison indiquant l'utilisation des ressources du système.

6. Produit selon la revendication 5, comprenant du code de programme informatique pour effectuer au moins une des étapes suivantes :
- l'affichage d'au moins une partie de ladite représentation normale d'interface utilisateur (702) dudit premier programme avec lesdites représentations réduites (720, 722, 724) de manière transparente de telle sorte qu'au moins une desdites représentations est partiellement translucide pour permettre de voir une autre représentation en dessous ;
- le réglage d'une valeur de transparence de ladite au moins une desdites représentations réduites (720, 722, 724) en fonction de la position du pointeur sur l'écran le long d'un geste en modifiant une valeur de canal alpha de ladite représentation réduite ;
- l'affichage d'une partie desdites représentations réduites (720, 722, 724) de telle sorte que les représentations réduites obstruent uniquement une partie de l'écran en laissant une partie de l'écran libre pour ladite interface utilisateur normale (702) ;
- la réception d'une représentation réduite (720, 722, 724) essentielle pour ledit second programme informatique, ladite représentation réduite essentielle comprenant un sous-ensemble d'informations provenant dudit second programme informatique présenté dans une taille sensiblement normale, et l'affichage de ladite représentation réduite essentielle pour un utilisateur simultanément avec ladite représentation (702) dudit premier programme ;
- la réception d'une entrée de la part d'un utilisateur à travers ladite représentation réduite (720, 722, 724) essentielle dudit second programme informatique pour commander ledit second programme informatique sur la base de ladite entrée reçue de telle sorte que l'affichage de ladite représentation normale d'interface utilisateur (702) dudit second programme informatique peut être évité ;
- la réception d'une entrée de la part de l'utilisateur concernant quelles informations d'informations provenant dudit second programme informatique ou d'informations d'activités sont à inclure dans ladite représentation réduite (720, 722, 724) essentielle.

7. Produit selon la revendication 5, dans lequel lesdites informations d'activité comprennent des informations sur l'activité de communication dudit second programme telles qu'un nombre de messages reçus ou envoyés, une quantité de données reçues ou envoyées ou l'activité dans un service de réseau auquel est connecté le second programme, tel qu'un service de médias sociaux.

8. Ordinateur comprenant une interface utilisateur (2030), un processeur (2020) et une mémoire (2010), ledit ordinateur étant adapté pour gérer des programmes informatiques dans ledit ordinateur, lesdits programmes informatiques étant dans un état d'exécution sur un système d'exploitation informatique et lesdits programmes informatiques comportant au moins une représentation normale d'interface utilisateur (702), telle qu'une fenêtre, pour recevoir une entrée de la part d'un utilisateur et générer une sortie pour un utilisateur, lesdits programmes informatiques comprenant un premier programme et un second programme, ledit ordinateur comprenant du code de programme informatique dans ladite mémoire (2010) qui, quand il est exécuté sur un processeur (2020), amène ledit ordinateur à :
- former des représentations réduites (720, 722, 724) desdites représentations normales d'interface utilisateur desdits programmes informatiques de telle sorte que lesdites représentations réduites peuvent s'ajuster de manière à être présentées simultanément sur un écran (1010) dudit ordinateur,
- afficher lesdites représentations réduites simultanément sur un écran (1010) dudit ordinateur pour un utilisateur,
- recevoir une entrée de sélection de la part d'un utilisateur pour sélectionner une représentation réduite d'un second programme informatique pour fournir à un utilisateur une représentation normale d'interface utilisateur dudit second programme en réaction à ladite entrée de sélection,
- afficher au moins une partie de ladite représentation normale d'interface utilisateur dudit premier programme simultanément avec lesdites représentations réduites, lesdites représentations réduites indiquant des états desdits programmes informatiques ;
- former des informations d'activité en rapport avec au moins ledit second programme, et former ladite représentation réduite dudit second programme afin qu'elle comprenne une indication desdites informations d'activité pour indiquer à l'utilisateur l'activité dudit second programme, lesdites informations d'activité comprenant des informations sur l'utilisation des ressources du système par ledit second programme telles que la consommation d'énergie, l'utilisation du processeur ou l'utilisation de la mémoire, ou toute combinaison indiquant l'utilisation des ressources du système.

9. Ordinateur selon la revendication 8, comprenant du code de programme informatique pour effectuer au moins une des étapes suivantes :
- l'affichage d'au moins une partie de ladite représentation normale d'interface utilisateur (702) dudit premier programme avec lesdites représentations réduites (720, 722, 724) de manière transparente de telle sorte qu'au moins une desdites représentations est partiellement translucide pour permettre de voir une autre représentation en dessous ;
- le réglage d'une valeur de transparence de ladite au moins une desdites représentations réduites (720, 722, 724) en fonction de la position du pointeur sur l'écran le long d'un geste en modifiant une valeur de canal alpha de ladite représentation réduite ;
- l'affichage d'une partie desdites représentations réduites (720, 722, 724) de telle sorte que les représentations réduites obstruent uniquement une partie de l'écran en laissant une partie de l'écran libre pour ladite interface utilisateur normale (702) ;
- la réception d'une représentation réduite (720, 722, 724) essentielle pour ledit second programme informatique, ladite représentation réduite essentielle comprenant un sous-ensemble d'informations provenant dudit second programme informatique présenté dans une taille sensiblement normale, et l'affichage de ladite représentation réduite essentielle pour un utilisateur simultanément avec ladite représentation (702) dudit premier programme ;
- la réception d'une entrée de la part d'un utilisateur à travers ladite représentation réduite (720, 722, 724) essentielle dudit second programme informatique pour commander ledit second programme informatique sur la base de ladite entrée reçue de telle sorte que l'affichage de ladite représentation normale d'interface utilisateur (702) dudit second programme informatique peut être évité ;
- la réception d'une entrée de la part de l'utilisateur concernant quelles informations d'informations provenant dudit second programme informatique ou d'informations d'activités sont à inclure dans ladite représentation réduite (720, 722, 724) essentielle.

10. Ordinateur selon la revendication 8, dans lequel lesdites informations d'activité comprennent des informations sur l'activité de communication dudit second programme informatique telles qu'un nombre de messages reçus ou envoyés, une quantité de données reçues ou envoyées ou l'activité dans un service de réseau auquel est connecté le second programme, tel qu'un service de médias sociaux.
